Europäisches Patentamt

European Patent Office

Office européen des brevets

(11) Veröffentlichungsnummer: **0 127 918**
**B1**

(12) # EUROPÄISCHE PATENTSCHRIFT

(45) Veröffentlichungstag der Patentschrift:
**20.05.87**

(21) Anmeldenummer: **84200736.1**

(22) Anmeldetag: **22.05.84**

(51) Int. Cl.⁴: **H 04 N 5/60,** H 04 S 1/00,
H 04 H 5/00

(54) Fernsehempfänger mit einem Verarbeitungsteil zum Aufbereiten von Stereo-/Zweiton-Signalen.

(30) Priorität: **27.05.83 DE 3319237**
**27.05.83 DE 3319238**

(43) Veröffentlichungstag der Anmeldung:
**12.12.84 Patentblatt 84/50**

(45) Bekanntmachung des Hinweises auf die Patenterteilung:
**20.05.87 Patentblatt 87/21**

(84) Benannte Vertragsstaaten:
**DE FR GB IT**

(56) Entgegenhaltungen:
**IEEE TRANSACTIONS ON CONSUMER
ELECTRONICS, Band CE-28, no. 4, November 1982,
Seiten 489-503, IEEE, New York, US; U. BUHSE:
"The german 2-carrier-system for terrestrial TV-
sound transmission systems and integrated
circuits for 'high quality' TV-receivers"**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB IT**

(72) Erfinder: **Buhse, Ulf- Heiner, Am Deich 40, D-2201
Kollmar (DE)**
Erfinder: **Kühn, Hans- Jürgen, Uhlengrund 14D,
D-2110 Buchholz (DE)**

(74) Vertreter: **Hartmann, Heinrich, Dipl.- Ing., Philips
Patentverwaltung GmbH Billstrasse 80 Postfach
10 51 49, D-2000 Hamburg 28 (DE)**

**EP 0 127 918 B1**

**Beschreibung**

Die Erfindung betrifft einen Fernsehempfänger mit einem Verarbeitungteil zum Aufbereiten von Stereo-/Zweiton-Signalen mit einem ersten Tonträger, der mit einem ersten Tonsignal moduliert ist und mit einem zweiten Tonträger, der mit einem zweiten Tonsignal sowie einem Pilotsignal moduliert ist, das seinerseits mit einem Stereo-Zweitonkennsignal moduliert ist, mit einem Synchrondemodulator, in dem das Pilotsignal demoduliert wird und dem das Ausgangssignal einer PLL-Schaltung zugeführt wird, die einen in der Frequenz steuerbaren Oszillator und einen ihn steuernden Phasendiskriminator enthält, der das vom Oszillator abgeleitete Signal mit einem Referenzsignal vergleicht, das frequenz- und phasenmäßig in einer festen Beziehung zu dem Pilotsignal steht. Ein solcher Fernsehempfänger ergibt sich bei Anwendung der bekannten integrierten Schaltung TDA 4940 der Firma Siemens.

Nach der deutschen Norm werden bekanntlich zur Übertragung von Stereo-/Zweiton-Fernsehsignalen zwei frequenzmodulierte Tonträger benutzt, wobei der zweite (schwächere) Tonträger mit einem Pilotträger frequenzmoduliert ist, der im Falle einer Stereo- oder einer Zweitonsendung mit einem Kennsignal amplitudenmoduliert ist, das die Sendeart (Stereo- oder Zweitonsendung) kennzeichnet und das im Empfänger benötigt wird, um die erforderlichen Umschaltungen automatisch durchführen zu können. Bei einem Fernsehempfänger mit der bekannten Schaltung wird das Kennsignal dadurch erhalten, daß der modulierte Pilotträger mit dem Ausgangssignal einer PLL-Schaltung multipliziert wird, deren Oszillator auf einer Frequenz gleich dem 28-fachen der Zeilenfrequenz schwingt und der in der Frequenz durch einen Phasendiskriminator gesteuert wird, der das in der Frequenz geteilte Oszillatorsignal mit der Zeilenfrequenz vergleicht.

Hierbei wird die Tatsache ausgenutzt, daß die Zeilenfrequenz nach der entsprechenden deutschen Norm frequenz- und phasenmäßig in einer festen Beziehung zur Pilotträgerfrequenz steht, und zwar beträgt die Pilotträgerfrequenz genau das 3,5-fache der Zeilenfrequenz. Infolgedessen kann aus dem Oszillatorsigal mittels eines 1:8-Frequenzteilers ein Signal gewonnen werden, das phasenstarr mit dem Pilotträger gekoppelt ist. Am Ausgang der Multiplizierschaltung verbleiben dann nur noch die Modulationsprodukte des Pilotträgers, d.h. eines der beiden Kennsignale.

Ein Vorteil dieser Schaltung liegt in ihrer hohen Kennsignalsicherheit und -empfindlichkeit. Ein Nachteil besteht aber darin, daß sie stets das Vorhandensein eines phasenstarr mit der Pilotträgerfrequenz gekoppelten Signals mit Zeilenfrequenz voraussetzt. Dies ist aber nicht immer verfügbar. Neuere Empfangs- und Wiedergabekonzepte eröffnen beispielsweise die Möglichkeit, den Empfangsteil eines Fernsehempfängers mit einem Videorecorder und den Wiedergabeteil mit einem Bildplattenspieler zu verbinden. Für die Aufnahme mit dem Videorecorder muß das Kennsignal jedoch schon demoduliert sein. Das dafür erforderliche zeilenfrequente Signal steht jedoch erst im Wiedergabeteil des Fernsehempfängers zur Verfügung und wird aus der Bildplatte abgeleitet, hat also keinerlei feste phasenmäßige Beziehung zum Pilotträger. Für ein solches Empfängerkonzept ist die bekannte Schaltung ungeeignet.

Zum Wiedergewinnen des Pilotsignals aus dem Antennensignal ist es erforderlich, die im Antennensignal enthaltenen beiden Träger, auf die die Tonsignale frequenzmoduliert sind, zunächst auf eine Frequenz umzusetzen, die dem Frequenzabstand der beiden erwähnten Träger von dem Bildträger entspricht, auf den das Videosignal moduliert ist. Bei der deutschen Norm entstehen auf diese Weise zwei Tonträger bei 5,5 bzw. 5,742 MHz. Diese beiden Tonträger werden bei einem bekannten Fernsehempfänger (Funkschau 2, 1982, Seiten 76 bis 79) voneinander durch zwei Filter getrennt und durch zwei Demodulatoren demoduliert, die die beiden Tonsignale sowie das modulierte Pilotsignal liefern.

Da im Zweiton-Betrieb die beiden Tonsignale inhaltlich voneinander unabhängig sind, wird eine sehr hohe Übersprechdämpfung (größer 60 dB) zwischen den beiden Tonkanälen gefordert. Deshalb und weil der Frequenzabstand des oberen Seitenbandes des Tonträgers mit der niedrigeren Frequenz von dem unteren Seitenband des Tonträgers mit der höheren Frequenz - bezogen auf die Tonträgerfrequenzen - sehr gering ist, muß die Filteranordnung aus sehr aufwendigen Filtern mit hoher Selektion bestehen. Bei der bekannten Anordnung werden dazu Keramikfilter verwendet. Auch die FM-Demodulatoren benötigen Resonanzkreise, die bei dem bekannten Empfänger ebenfalls Keramikfilter sind. Alle Filter und Resonanzkreise müssen abgeglichen werden. Der Verarbeitungteil zum Aufbereiten der Zweiton-Stereo-Signale ist daher sehr aufwendig.

Ein weiterer Nachteil ist, daß mit einem derartigen Empfänger nur Signale entsprechend der deutschen Norm empfangen werden können. Sollen Signale nach einer anderen Norm, d.h. mit einer anderen Frequenz des Tonträgers bzw. einem anderen Frequenzabstand zwischen den Trägern für die Bild- und die Toninformation, verarbeitet werden, sind weitere Filter, Resonanzkreise usw. erforderlich.

Aufgabe der vorliegenden Erfindung ist es, einen Fernsehempfänger der eingangs genannten Art so auszugestalten, daß der Aufwand verringert wird und bei guter Kennsignalsicherheit und -empfindlichkeit eine Referenzfrequenz aus dem Synchron- oder dem Zwischenfrequenzteil des Fernsehempfängers zur Rückgewinnung des Pilotsignals nicht erforderlich ist.

Diese Aufgabe wird erfindungsgemäß dadurch gelöst, daß das Oszillatorsignal einer Mischstufe zugeführt wird, die zumindest den zweiten Tonträger mit dem Oszillatorsignal mischt und in einen niedrigeren Frequenzbereich umsetzt, und daß das Ausgangssignal der Mischstufe über einen Demodulator einem das Pilotsignal selektierenden Filter zugeführt wird, dessen Ausgangssignal als Referenzsignal dem Phasendiskriminator zugeführt wird.

Mit "Tonträger" ist dabei ein Träger bezeichnet, dessen Frequenz dem Frequenzabstand des die Toninformation tragenden Trägers von dem die Bildinformation tragenden Träger entspricht. In der Regel werden der bzw. die Tonträger als Intercarrier-Signal beim Intercarrier-Verfahren, d.h. als Mischprodukt des bzw. der Tonträger(s) für die Toninformation mit dem Träger für die Bildinformation gewonnen.

Bei der Erfindung wird zur Steuerung des in der PLL-Schaltung enthaltenen Oszillators also das (modulierte) Pilotsignal benutzt, so daß ein Referenzsignal aus dem Synchron- oder dem Zwischenfrequenzteil nicht erforderlich ist. - Durch die Umsetzung der beiden Tonträger in einen niedrigeren Frequenzbereich mit Hilfe der Mischstufe ändert sich zwar nicht der Frequenzabstand, doch wird der Aufwand für die Filteranordnung verringert, weil die Anforderungen an deren Selektionen um so geringer werden, je kleiner das Verhältnis zwischen dem Frequenzabstand und der (umgesetzten) Trägerfrequenz ist. Beim Einsatz der erfindungsgemäßen Schaltung in einem Mehrnormenempfänger wird beim Empfang von Sendungen nach einem anderen Standard mit nur einem Tonträger von der PLL-Schaltung lediglich der Oszillator benötigt. Dessen Frequenz braucht dann nur auf einen anderen Wert umgeschaltet zu werden, während die Filteranordnung unverändert bleiben kann, wenn die Oszillatorfrequenz so gewählt ist, daß die umgesetzte Frequenz von dem Demodulator zur Demodulation des Tonträgers (sowie dem ihm gegebenenfalls vorgeschalteten Filter) verarbeitet werden kann.

Der Oszillator hat bei der Erfindung eine Doppelfunktion. Er ist einerseits Teil der PLL-Schaltung und dient andererseits zur Umsetzung der beiden Tonträger in ein niedrigeres Frequenzband.

Es sei an dieser Stelle erwähnt, daß aus "Funktechnik" 1966, Nr. 19, Seiten 680 bis 682 an sich ein Fernsehempfänger bekannt ist, bei dem das frequenzmodulierte Intercarrier-Signal, d.h. der Tonträger, auf eine niedrige Zwischenfrequenz umgesetzt wird, so daß der Aufwand für die Demodulation wesentlich verringert wird. Der bekannte Fernsehempfänger erlaubt indes nicht, die Verarbeitung von Stereo-Zweiton-Signalen.

Vorteilhafte Weiterbildungen sind in den Unteransprüchen beschrieben.

Die Erfindung wird nachstehend anhand der Zeichnungen näher erläutert. Es zeigen

Fig. 1 das Frequenzspektrum eines Fernsehsignals im Zwischenfrequenzbereich,

Fig. 2 das Frequenzspektrum der Tonträger nach einer Intercarrierdemodulation,

Fig. 3 das Frequenzspektrum des zweiten Tonträgers nach der Frequenzdemodulation,

Fig. 4 eine bevorzugte Ausführungsform der Erfindung.

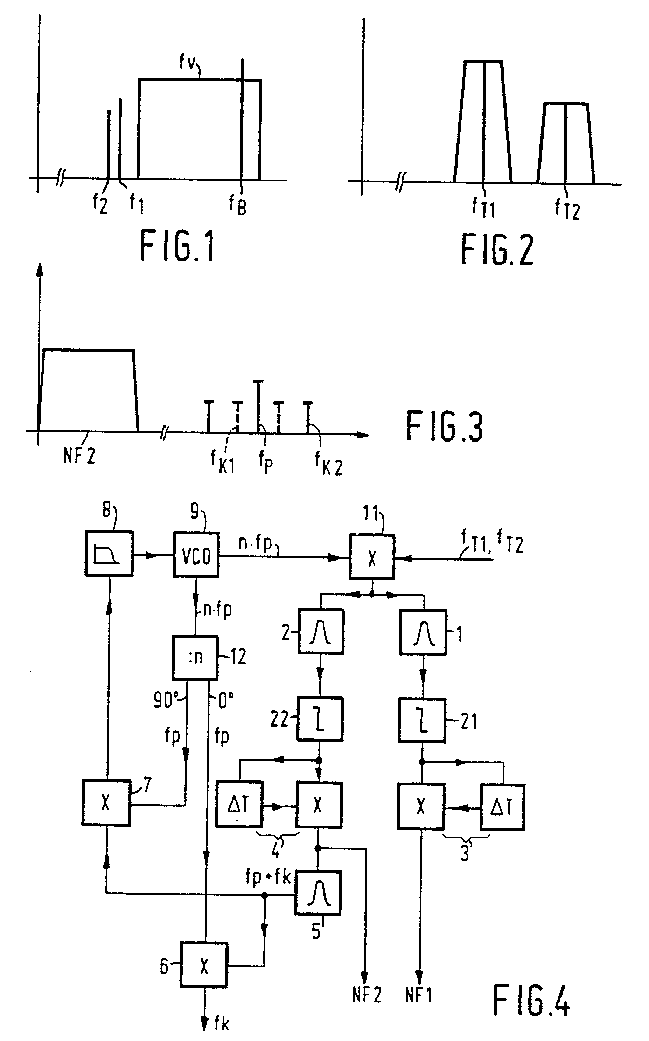

In Fig. 1 bezeichnet $f_B$ die Zwischenfrequenz des Trägers für die Bildinformation. Sie liegt etwa bei 38,9 MHz. Mit $f_v$ ist das Frequenzspektrum des Videosignals im Zwischenfrequenzbereich bezeichnet. 5,5 MHz unterhalb des Bildträgers befindet sich der Träger $f_1$ für die erste Toninformation, dessen Amplitude um 13 dB niedriger ist als die des Bildträgers und darunter der Träger $f_2$ für die zweite Toninformation, dessen Amplitude um 20 dB niedriger ist als die des Trägers für die Bildinformation und dessen Frequenzabstand von $f_B$ 5,742 MHz beträgt.

Nach der Intercarrier-Bildung nehmen die beiden Tonträger die in Fig. 2 dargestellte Lage ein. Das Videoseitenband $f_v$ ist der Übersichtlichkeit halber nicht dargestellt. Der erste Tonträger $f_{T1}$ liegt dabei bei 5,5 MHz und der zweite Tonträger $f_{T2}$ bei 5,742 MHz.

Gemäß Fig. 4 werden die beiden Tonträger dem einen Eingang einer Mischstufe 11, beispielsweise einer Multiplizierstufe, zugeführt. Dem anderen Eingang dieser Mischstufe wird das Ausgangssignal eines Oszillators 9 zugeführt, dessen Frequenz das 112-fache der Pilotfrequenz $f_P$ beträgt, d.h. etwa 6,125 MHz. Am Ausgang der Mischstufe 11 treten Frequenzkomponenten auf, die der Differenz bzw. der Summe der Frequenzen an den Eingängen der Mischstufen entsprechen. Die niedrigeren dieser Frequenzkomponenten liegen also bei 625 kHz (entsprechend dem ersten Tonträger $f_{T1}$) und 383 kHz (entsprechend dem zweiten Tonträger $f_{T2}$).

Der Ausgang der Mischstufe ist mit den Eingängen zweier Filter 1 und 2 verbunden, die die beiden nun auf 383 kHz bzw. 625 kHz umgesetzten Tonträger voneinander trennen. Da der Frequenzabstand nach der Umsetzung sich nicht verändert, die Tonträger aber auf wesentlich niedrigere Frequenzen umgesetzt sind, ist die frequenzmäßige Trennung der beiden Tonträger und ihrer Seitenbänder voneinander wesentlich einfacher als beispielsweise bei der Schaltung nach "Funkschau" 2, 1982, Seiten 76 bis 79, und der Selektionsaufwand nimmt entsprechend ab. Darüber hinaus können die Filter 1 und 2 in diesem Frequenzbereich als Gyratorfilter ausgebildet sein, die weitgehend in integrierter Schaltungstechnik herstellbar sind.

Den beiden Filtern 1 und 2 sind Begrenzer-Verstärker 21 und 22 nachgeschaltet, die die Ausgangssignale der Filter bis zur Begrenzung verstärken, so daß jede Amplitudenabhängigkeit und Amplitudenstörmodulation unterdrückt wird. Die Ausgangssignale der Begrenzer-Verstärker 21 und 22 werden einem FM-Demodulator 3 bzw. 4 zugeführt. Die FM-Demodulatoren können von üblicher Bauart sein; jedoch ist bei den relativ niedrigen Frequenzen, auf die die Tonträger umgesetzt sind, auch der Einsatz von Laufzeitdemodulatoren möglich. Derartige Laufzeitdemodulatoren enthalten eine Multiplizierstufe, der das Ausgangssignal des Begrenzer-Verstärkers einerseits direkt und andererseits mit einer zeitlichen Verzögerung zugeführt wird, die einem Viertel einer Periode des (durch die Mischstufe 11 in der Frequenz heruntergesetzten) Tonträgers entspricht, so daß sich für den Demodulator 4 eine Verzögerungszeit von etwa 0,65 μsec und für den Demodulator 3 eine Verzögerungszeit von etwa 0,4 μsec ergibt. Am Ausgang des FM-Demodulators 3 ergibt sich dabei das auf den ersten Tonträger $f_{T1}$ modulierte Niederfrequenzsignal $N_{F1}$, während am Ausgang des FM-Demodulators 4 ein Signal mit dem in Fig. 3 dargestellten Frequenzspektrum erscheint, das außer dem zweiten NF-Signal NF2 noch den durch jeweils eines der beiden Kennsignale $f_{K1}$ (117,5 Hz) oder $f_{K2}$ (274,1 Hz) amplitudenmodulierten Pilotträger fp (54,687 kHz) enthält. Das modulierte Pilotsignal wird mittels eines Bandpasses 5 ausgefiltert und einerseits einer PLL-Schaltung und andererseits einem Eingang eines Synchron-Demodulators 6 in Form einer Multiplizierstufe zugeführt. In dieser Multiplizierstufe wird das Ausgangssignal des Bandpasses 5 mit einem von der PLL-Schaltung gelieferten Signal gemischt, das die gleiche Frequenz hat wie das in dem gefilterten Signal enthaltene Pilotsignal und die gleiche oder eine um 180° versetzte Phasenlage. Infolgedessen ergibt sich am Ausgang der Multiplizierschaltung 6 ein Signal, dessen Frequenz der Differenz der Ausgangssignale des Bandpasses 5 und der PLL-Schaltung entspricht, die gerade gleich der Frequenz des auf das Pilotsignal modulierten Kennsignals $f_{K1}$ oder $f_{K2}$ ist. Dieses Signal wird in bekannter Weise zur Steuerung der weiteren Verarbeitung der Niederfrequenzsignale NF1 und NF2 benutzt.

Die PLL-Schaltung enthält einen Phasendiskriminator 7, dessen einem Eingang das Ausgangssignal des Bandpasses 5 zugeführt wird und dessen Ausgang mit dem Eingang eines Tiefpasses 8 verbunden ist, der alle höherfrequenten Modulationsprodukte unterdrückt und der mit einem Steuereingang des Oszillators 9 zur Steuerung seiner Frequenz verbunden ist. Das Ausgangssignal des Oszillators 9 wird - wie schon erwähnt - dem einen Eingang der Mischstufe 11 zugeführt sowie einem Frequenzteiler 12, in dem es durch n = 112 dividiert wird. Der Frequenzteiler 12 weist zwei Ausgänge auf, an denen Signale mit derselben Frequenz, jedoch mit einer um 90° versetzten Phasenlage abnehmbar sind. Das eine dieser Signale wird einem weiteren Eingang des Phasendiskriminators 7 und das andere einem weiteren Eingang des Synchrondemodulators bzw. der Multiplizierstufe 6 zugeführt.

Der Phasendiskriminator 7, der Tiefpaß 8, der Oszillator 9 und der Frequenzteiler 12 bilden die PLL-Schaltung, die durch das Ausgangssignal des Bandpasses, d.h. durch den modulierten Pilotträger, synchronisiert wird. Im stationären Zustand dieser PLL-Schaltung ergeben sich am Ausgang des Frequenzteilers 12 daher Schwingungen, deren Frequenz genau der Frequenz des im Ausgangssignal des Bandpasses 5 enthaltenen Pilotträgers fp entspricht, wobei das dem Phasendiskriminator 7 zugeführte Signal gegenüber diesem Träger um 90° versetzt ist, während das dem Synchrondemodulator 6 zugeführte Signal die gleiche oder die entgegengesetzte Phasenlage aufweist.

Die Phasenverschiebung von 90° an den beiden Ausgängen des Frequenzteilers 12 läßt sich beispielsweise dadurch erreichen, daß dieser aus einem gemeinsamen Frequenzteiler aufgebaut ist, der das Ausgangssignal des Oszillators 9 auf den doppelten erforderlichen Wert 1:56 herunterteilt und zwei gegenphasige Ausgangssignale liefert, die zwei 1:2 Frequenzteilern zugeführt werden, an deren Ausgängen die beiden um 90° versetzten Rechteckschwingungen abnehmbar sind. Voraussetzung zur Erzeugung der Phasenverschiebung auf die beschriebene Weise ist allerdings, daß n geradzahlig ist.

Die Erfindung wurde anhand eines Ausführungsbeispiels mit einem Frequenzteilerverhältnis n = 112 beschrieben, jedoch ergeben sich gleich gute Verhältnisse bei anderen Frequenzteilerverhältnissen z.B. im Bereich n = 108 bis n = 120. Die erfindungsgemäße Schaltung arbeitet auch dann noch zufriedenstellend, wenn andere Frequenzteilerverhältnisse benutzt werden, so daß die Oszillatorfrequenz wesentlich von dem angegebenen Wert abweicht. In diesem Fall werden die beiden Tonträger $f_{T1}$ und $f_{T2}$ jedoch in einen Frequenzbereich umgesetzt, der zwar niedriger liegen kann als der Frequenzbereich, in dem die Tonträger liegen, der jedoch einen höheren Filteraufwand erfordert als in dem angegebenen Ausführungsbeispiel.

Wenn mit einem Fernsehempfänger, der den erfindungsgemäßen Aufbereitungsteil für die Stereo-Zweiton-Signale enthält, Fernsehsendungen nach einer anderen Norm empfangen werden sollen, bei denen der einzige Tonträger eine andere Frequenz hat, d.h. bei denen der Frequenzabstand zwischen dem Träger für die Bildinformation und für die Toninformation von 5,5 MHz bzw. 5,742 MHz abweicht, braucht lediglich die Oszillatorfrequenz 9 so geändert zu werden, daß am Ausgang der Mischstufe 11 eine Differenzfrequenz resultiert, die in den Durchlaßbereich eines der beiden Filter 1 oder 2 fällt. Zu diesem Zweck wird die durch die PLL-Schaltung gebildete Regelschleife unterbrochen und dem Oszillator anstelle des Ausgangssignals des Tiefpasses 8 eine Spannung zugeführt, die diesen auf die erforderliche Frequenz steuert.

## Patentansprüche

1. Fernsehempfänger mit einem Verarbeitungsteil zum Aufbereiten von Fernseh-/Stereo-Zweitonsignalen mit einem ersten Tonträger ($f_{T1}$), der mit einem ersten Tonsignal (NF1) moduliert ist und mit einem zweiten Tonträger ($f_{T2}$), der mit einem zweiten Tonsignal (NF2) sowie einem Pilotsignal (fp) moduliert ist, das seinerseits mit einem Stereo-Zweitonkennsignal ($f_{K1}$, $f_{K2}$) moduliert ist, mit einem Synchrondemodulator (6), in dem das Pilotsignal (fp) demoduliert wird und dem das Ausgangssignal einer PLL-Schaltung (7, 8, 9, 12) zugeführt wird, die einen in der Frequenz steuerbaren Oszillator (9) und einen ihn steuernden Phasendiskriminator (7) enthalt, der das vom Oszillator (9) abgeleitete Signal mit einem Referenzsignal vergleicht, das frequenz- und phasenmäßig in einer festen Beziehung zu dem Pilotsignal steht, dadurch gekennzeichnet, daß das Oszillatorsignal einer Mischstufe (11) zugeführt wird, die zumindest den zweiten Tonträger ($f_{T2}$) mit dem Oszillatorsignal mischt und in einen niedrigeren Frequenzbereich umsetzt, und daß das Ausgangssignal der Mischstufe über einen Demodulator (4) einem das Pilotsignal selektierenden Filter (5) zugeführt wird, dessen Ausgangssignal als Referenzsignal dem Phasendiskriminator (7) zugeführt wird.

2. Schaltungsanordnung nach Anspruch 1, dadurch gekennzeichnet, daß das Ausgangssignal des Oszillators (9) dem Phasendiskriminator (7) sowie dem Synchrondemodulator (6) über einen Frequenzteiler (12) zugeführt wird, wobei zwischen den dem Phasendiskriminator und dem Synchrondemodulator zugeführten Signalen eine Phasenverschiebung von 90° besteht.

3. Schaltungsanordnung nach Anspruch 2, dadurch gekennzeichnet, daß der Frequenzteiler (12) die Oszillatorfrequenz im Verhältnis 1:n teilt, wobei n eine ganze Zahl zwischen 108 und 120 ist, vorzugsweise eine gerade Zahl.

## Claims

1. A television receiver incorporating a processing section for processing television/stereo-dual sound signals having a first sound carrier ($f_{T1}$) which is modulated by a first sound signal (NF1) and a second sound carrier ($f_{T2}$) which is modulated by a second sound signal (NF2) and also by a pilot signal (fp) which is modulatad by a stereo-dual sound identifying signal ($f_{K1}$, $f_{K2}$), comprising a synchronous demodulator (6) in which the pilot signal (fp) is demodulated and to which an output signal of a phase-locked loop circuit (7, 8, 9, 12) is applied which phase-locked loop circuit comprises a frequency-controllable oscillator (9) and a phase discriminator (7) controlling it which compares the signal derived from the oscillator (9) with a reference signal which as regards frequency and phase is in a fixed relationship to the pilot signal, characterized in that an oscillator output signal is applied to a mixer stage (11) which at least mixes the second sound carrier ($f_{T2}$) with the oscillator output signal and converts this second sound carrier into a lower frequency range and that an output signal of the mixer stage is applied via a demodulator (4) to a filter (5) which selects the pilot signal and whose output signal is applied to the phase discriminator (7) as a reference signal.

2. A circuit arrangement as claimed in Claim 1, characterized in that the output signal of the oscillator (9) is applied to the phase discriminator (7) and also to the synchronous demodulator (6) via a frequency divider (12), there being a phase shift through 90° between the signals applied to the phase discriminator and to the synchronous demodulator.

3. A circuit arrangement as claimed in Claim 2, characterized in that the frequency divider (12) divides the oscillator frequency in the ratio 1:n, where n is an integer between 108 and 120, preferably an even number.

## Revendications

1.- Récepteur de télévision comportant une unité de traitement pour élaborer des signaux de télévision stéréo/à deux voies de son avec une première porteuse son ($f_{T1}$) qui est modulée par un premier signal audio (NF1) et avec une seconde porteuse son ($f_{T2}$) qui est modulée par un second signal audio (NF2) ainsi que par un signal pilote (fp) qui, pour sa part, est modulé par un signal d'identification de stéréo-à deux voies ($f_{K1}$, $f_{K2}$), comportant un démodulateur synchrone (6) dans lequel le signal pilote (fp) est démodulé et auquel le signal de sortie d'un circuit PLL (7, 8, 9, 12) est appliqué, qui comprend un oscillateur pilotable en fréquence (9) et un discriminateur de phase (7) qui le commande, qui compare le signal dérivé de l'oscillateur (9) à un signal de référence qui, en fréquence et en phase, présente une relation fixe avec le signal pilote, caractérisé en ce que le signal d'oscillateur est appliqué à un étage mélangeur (11) qui mélange au moins la seconde porteuse son ($f_{T2}$) au signal d'oscillateur et l'amène à un domaine de fréquence inférieur et que le signal de sortie de l'étage mélangeur est appliqué, par l'intermédiaire d'un démodulateur (4), à un filtre (5) sélectionnant le signal pilote dont le signal de sortie est appliqué à titre de signal de référence au discriminateur de phase (7).

2.- Montage de circuit suivant la revendication 1, caractérisé en ce que le signal de sortie de l'oscillateur (9) est appliqué au discriminateur de phase (7) ainsi qu'au démodulateur synchrone (6) par l'intermédiaire d'un diviseur de fréquence (12), un déphasage de 90° existant entre les signaux appliqués au discriminateur de phase et au démodulateur synchrone.

3.- Montage de circuit suivant la revendication 2,

caractérisé en ce que le diviseur de fréquence (12) divise la fréquence d'oscillateur selon un rapport de 1:n où n est un nombre entier entre 108 et 120, de préférence un nombre pair.

FIG.1

FIG.2

FIG.3

FIG.4